# EUROPEAN PATENT SPECIFICATION

(11) **EP 1 483 927 B1**
(45) Date of publication and mention of the grant of the patent: **02.01.2008**
(21) Application number: 02701148.5
(22) Date of filing: 12.03.2002
(51) Int. Cl.: H04Q 7/38

(54) **RADIO RESOURCE ALLOCATION IN A RADIO COMMUNICATION NETWORK**
FUNKBETRIEBSMITTELZUWEISUNG IN EINEM FUNKÜBERTRAGUNGSNETWERK
ALLOCATION DE RESSOURCES RADIO DANS UN RESEAU DE RADIOCOMMUNICATION

(43) Date of publication of application: 08.12.2004
(73) Proprietor: Ascom (Schweiz) AG, 3000 Bern 14 (CH)
(72) Inventor: WU, Raymond, CH-3185 Schmitten (CH)
(74) Representative: Roshardt, Werner Alfred
(86) International application number: PCT/CH2002/000148
(87) International publication number: WO 2003/077579

(56) References cited:
- EP-A- 0 933 955
- US-A1- 2001 019 954

## Description

### Technical field

The invention relates to a method for allocating radio resources of a radio communication network to a plurality of users, where a user is allocated a certain transmission capacity. The invention further relates to a radio network as well as a device with means for an allocation of radio resources to a plurality of users, where a user is allocated a certain transmission capacity.

### Prior art

In modern telecommunication networks, transmission frequencies and transmission time typically are limited. That is why the availability of radio resources is one of the most valuable factors in communication systems, particularly in radio communication networks.

Many different schemes, e.g. time, frequency or code division multiple access systems (TDMA, FDMA, CDMA respectively), have been developed to increase the available resources for a given transmission system. While these transmission schemes work very well, the efficient allocation of the available resources to different users is a challenge. The goal is to allocate resources very quickly to a user who has information to transmit and to immediately deallocate it from the user, when he has nothing to transmit in order to allocate it to another user who has something to transmit.

In resource allocation, it is not only important, how much of the available resource, i.e. data rate, is allocated to a user, but also how fast it is allocated to him. Radio resource allocation is particularly difficult, when a user is sending information intermittently. Ideally, the necessary resources should be allocated to the user as soon as he asks for it and then the resources should be taken away, again without delay, when he has nothing more to send.

Existing radio networks try to solve this problem in different ways. Some systems start with allocating several short blocks of a given resource after the other and then increase the duration of the blocks until the user is allocated a continuous amount of resource. Others allocate a certain resource to a particular user for a long time right from the start.

In the first case, the user can not send data continuously from the beginning, but only during the time when the resource is available. Hence he sometimes has to wait for allocation even if he has data to send. This results in a lowered throughput for this user, but since the resource can be shared with other users, less resources are wasted. In the second case, the user will have a high throughput rate if he has data to send. However, if he is only able to send data intermittently, some of the resources allocated to the user are wasted, because he was not using it all the time.

Each allocation method has its advantages and disadvantages. One method is best suited for a first application while another method is best suited for another application. The problem is, that the network provider does not know, how the actual allocation method performs. He gets no corresponding feedback.

Document EP 0 933 955 A1 shows a cellular radio system using CDMA. The single base stations (BS1...BSn) are pooled in base station groups (BSa, BSb...) and those have been allocated a plurality of radio frequencies (f1...f6). In order to allow an effective use of the respective radio frequencies, the channel occupancy is monitored.

Document US 2001/0019954 A1 describes a method for controlling an overload of a CDMA mobile communication system. Therefore it is monitored if the utility rate of the control processor resource and the call resource exceed a certain threshold value stored in a data base of the base transceiver station (BTS) and the base station controller (BSC). If the overload occurs, a base station manager (BSM) is informed that the overload occurs in the BTS or the BSC.

### Summary of the invention

It is therefore an object of the invention to provide a method of allocating radio resources of a radio communication network to a plurality of users, permitting an efficient radio resource allocation.

The object of the invention is achieved by the method defined in claim 1. In a radio communication network where the radio resources of the network are allocated to a plurality of users and where a user is allocated a certain transmission capacity, the radio resources are, according to the invention, allocated to a user depending on an utilization factor which is determined relating to the transmission capacity allocated to a user. In other words, it is determined, how much of the transmission capacity, which is assigned to a particular user, is actually used by this particular user. If the actually used transmission capacity is too low compared to the assigned capacity, then the algorithm for radio resource allocation can be modified or adjusted in order to achieve a higher utilization factor.

The utilization factor is some kind of measure for the amount of radio resources, which are assigned to but not used by the user, in other words, a measure for the wasted amount of radio resources. The utilization factor can, for example, be expressed as a ratio of the used to the unused resources, as an absolute value of the unused resources or as any other suitable value.

By determining the utilization factor relating to the transmission capacity allocated to a user and taking this utilization factor into account in the radio resource allocation algorithm, the invention enables a more efficient use of the available radio resources. This in turn enables the network to serve more subscribers simultaneously.

There are different possibilities to determine the utilization factor. It could for example be determined by monitoring the absolute amount of transmitted data or by determining the existence of an active connection to another terminal. But these possibilities could lead to distorted values, because the user has transmitted a large amount of data, but could have transmitted an even larger amount or because there exists an active connection, but actually no data is transmitted.

In a preferred embodiment of the invention, the utilization factor is determined by detecting time intervals in which the user does not or not completely exploit the transmission capacity which is allocated to him. He either transmits no or not as much data as the assigned transmission capacity would allow. This enables a precise measurement how much of the transmission capacity allocated to the user is actually used by the user to transmit data.

An advantageous way to determine the utilization factor is to detect just those time intervals, in which the user does not make use of the assigned transmission capacity, that means in which the user does not transmit or receive any data at all.

The detection of these time intervals can be done in several, favoured ways. The first of them is to directly monitor the radio interface of the radio communication network and detect those time periods without any data throughput. In communication systems with a plurality of communication channels, only those channels which are allocated to the particular user have to be monitored.

This method has the advantage, that the equipment to detect the time intervals, i.e. a radio receiver, can be placed anywhere between the transmitter and the receiver, where the signal from the transmitter can be received. It furthermore permits to consider properties of the air interface when determining the utilization factor.

In a radio network, data transmission between a transmitter and a transceiver is typically done with a multilayer protocol stack where each layer is designed to carry out a specific task. Many of the current protocol stacks comply with the generally known OSI (Open Systems Interconnection) model, which specifies seven different layers. When directly monitoring the air interface, the measuring of the data rate, the number of bytes transmitted and the actual transmission time can, for example, be done by evaluating the protocols used for the transmission in the radio network.

In the second method it is not the air interface that is monitored, but it is the first layer of the protocol stack, which is monitored directly in the transmitter and/or the receiver. The first layer is usually known as the physical layer and performs tasks in connection with the actual bit transmission.

An advantage of this method is, that no additional hardware is necessary, because the monitoring can for example be implemented as software running on the hardware of the transmitter and/or the receiver.

It is more difficult and more demanding to determine the utilization factor if the user does transmit data, but does not completely exploit the transmission capacity which is allocated to him. So a third method can be applied in systems, where the user is allocated radio resources by allocating a data transmission rate or where the allocated radio resources can be expressed as a data transmission rate. Here, an actual transmission time is determined by measuring, how much time is needed by the user to transmit a given amount of data. Additionally a target transmission time, which relates to the shortest possible time period in which the given amount of data can be transmitted with the given data rate, is calculated by dividing the given amount of data by the data transmission rate. Next, the time intervals without data transmission are calculated by subtracting the target transmission time from the actual transmission time. Finally, the desired utilization factor can be determined.

This method also can be easily implemented in existing systems for instance as pure software to be integrated in node of a telephone network. However, to employ this method, the data transmission rate (e.g. a given number of bytes per second) as well as the amount of transmitted data (e.g. the number of bytes transmitted) have to be known or at least measurable.

The measuring of the data rate, the number of bytes transmitted and the actual transmission time can, for example, again be done by monitoring the protocols used for the transmission in the radio network.

In some communication systems, a user can be assigned more than one transmission channel simultaneously, i.e. two or more timeslots in a TDMA system or two different carrier frequencies in a FDMA system. It would be possible to determine the utilization factor relating to the joint transmission capacity of all or at least two transmission channels. However, in such systems, it could be possible, that the user continuously transmits data in one channel but only intermittently in another channel. Hence, there are time intervals with a higher throughput than other time intervals but there are no time intervals with no data throughput at all. Thus the determination of the utilization factor by detection of time intervals without any data transmission could produce incorrect results.

In order to obtain accurate results with any of the above-mentioned methods, the utilization factor is preferably determined for each transmission channel separately by separately monitoring each channel.

It is a further object of the invention to provide a radio network and a device for an efficient allocation of radio resources to a plurality of users. This object is achieved by the radio network according to claim 8 and the device according to claim 12 respectively.

A radio communication network with means for an allocation of radio resources to a plurality of users, where a user is allocated a certain transmission capacity, further includes means for the determination of the utilization factor relating to the transmission capacity allocated to a specific user. According to the invention, the means for allocating the radio resources are formed in such a way that the radio resources are allocated to the users depending on the determined utilization factor.

Regarding the object of the invention to provide a device for an efficient allocation of radio resources of a radio communication network, it is achieved by including the means for the determination of the utilization factor in this device.

From the following detailed description and from the entirety of the claims it will be clear to a person skilled in the art, that there are more advantageous embodiments and feature combinations of the invention.

### Short description of the drawings

The drawings used for illustration of the examples show:
- Fig. 1: A diagram showing the waiting time for a user and the wastage of radio resources for a particular user transmission behaviour and a specific radio resource allocation method within a radio communication network;
- Fig. 2: another diagram showing the waiting time and the wastage of radio resources for another transmission behaviour and another allocation method;
- Fig. 3: a schematical view of a part of a radio communication network according to the invention and
- Fig. 4: a more detailed view of some elements of the radio network as shown in fig. 3.

In general, the same objects in different drawings are given the same reference numerals.

### Ways of carrying out the invention

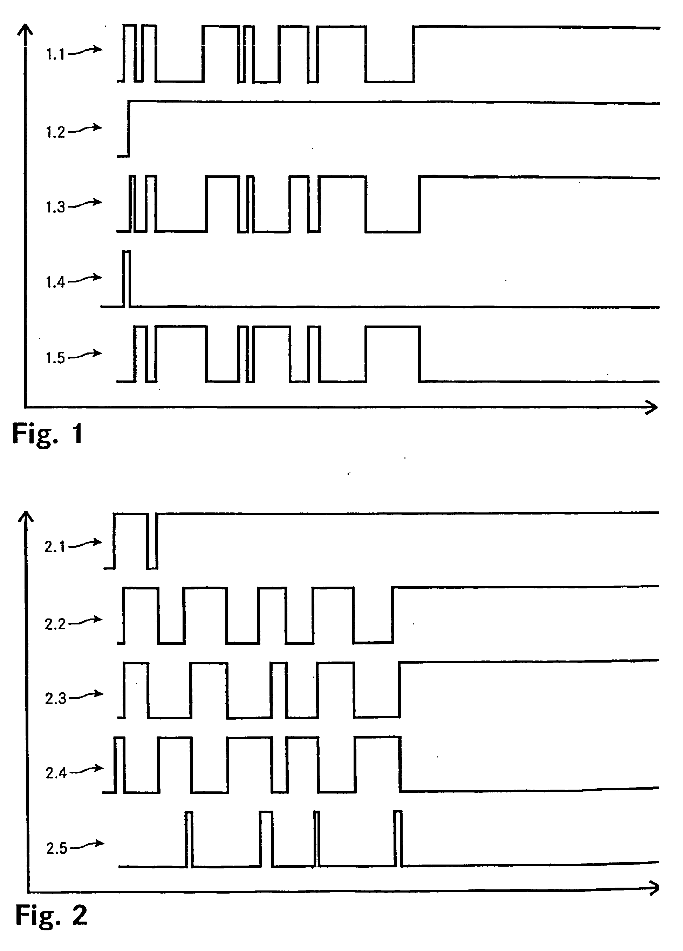

There exist different methods within a radio communication network to allocate radio resources to the users. In order to minimize the waiting time for a user, a first method allocates a particular amount of data for a long time, as soon as a user wants to transmit data. This method has a disadvantage with respect to the exploitation of the totally available radio resources. This is particularly true in those cases, where the user is not able to produce enough data to send it continuously, because for example his production rate is smaller than the data transmission rate or because he does not want to send anything. The waiting time for a user and the wastage of the radio resources for such a scenario are shown in the diagram of figure 1.

Time is shown as the horizontal axis of the diagram. The first row 1.1 shows the intention of the user to transmit data. Row 1.1 is alternating between high and low, because, as explained above, the user is not able to send data continuously. Row 1.2 shows the radio resources which are allocated to the user. After the first send request of the user, he is allocated a particular resource for a long time without any interruptions. Row 1.3 shows the time periods, when the user is actually transmitting data. Row 1.3 has substantially the same shape as row 1.1, which indicates that the user can send data as soon as he has some data to send. He does not have to wait until he is allocated some resources to transmit his data. The waiting time for the user is shown in row 1.4. Except a small period of time after the send request, when the user has to wait until he is allocated some resources, row 1.4 is always low. Finally, row 1.5 shows the wastage of the radio resources allocated to the user. During those periods of time where the line in row 1.5 is high, radio resources are allocated to the user, but not used by him, because he is not able or does not want to transmit data. As can be seen, the percentage of the line being high is relatively high and therefore a lot of radio resources are wasted. On the other hand, the user hardly has to wait to transmit data, resulting in a high data throughput for this user.

In the diagram of figure 2, waiting time and resource wasting are shown for a second scenario. In order to optimize the utilization of the available radio resources, a user is allocated a specific radio resource only for small periods of time, no matter whether the user has a small or a large amount of data to send.

In our example in figure 2, the user has a lot of data to send, which is indicated by row 2.1, which is high almost all of the time. As shown by the alternating row 2.2, the user is allocated a specific radio resource only for small periods of time. Later on, when the resource allocation algorithm of the radio network realises that the user has a large amount of data to send, the user is allocated the resource a long period of time. In this case, row 2.3 which shows the actual transmission time, has substantially the same shape as row 2.2, which indicates that the actual sending time is not limited by the ability of the user to produce the data but by the short resource allocation periods. Accordingly, the data throughput is lowered, because the user has to wait for data transmission almost all of the time, when he is not allocated any resources. This is shown in row 2.4. The last row 2.5 again shows the wastage of the radio resources. Here the advantage of this allocation method can be seen. Only a small amount of the allocated radio resources are wasted, because the periods of time, where the user is allocated the radio resources, but does not actually transmit any data, are very small. Hence the available radio resources can be shared with other users.

To find a better radio resource allocation algorithm, for instance an algorithm allowing to find a compromise between data throughput and resource wastage, it is essential to know, how much of the radio resources allocated to a particular user are actually utilized by the user to transmit data.

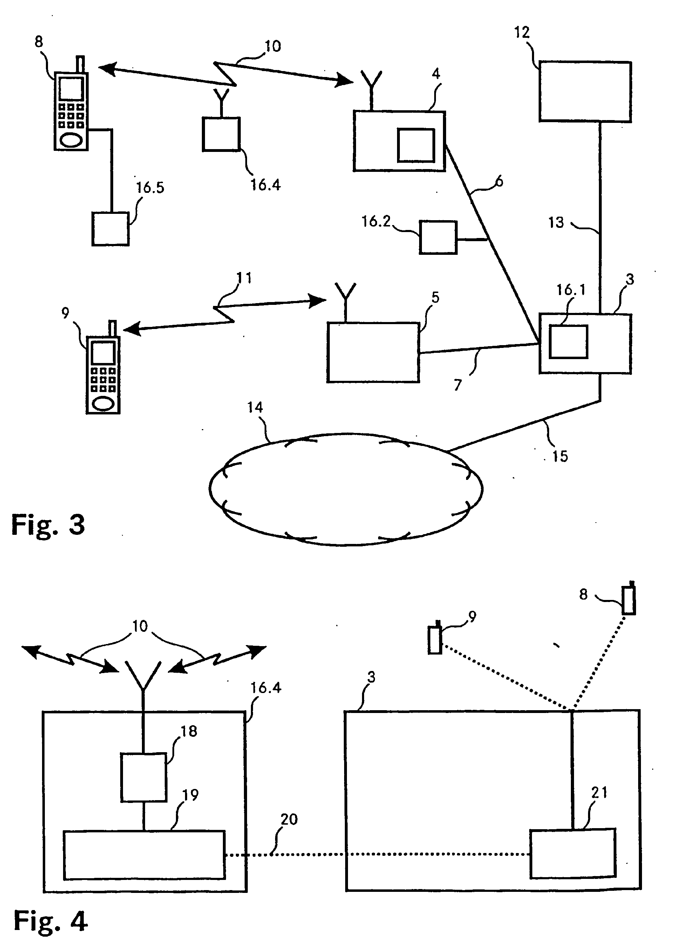

According to the invention, a utilization factor, which is a measure for the amount of radio resources wasted by a user, is determined. As an example of a radio communication net work, figure 3 shows a part of a mobile telephone network with a mobile switching centre (MSC) 3, two basestations 4 and 5, which are connected to the MSC 3 by communication links 6 and 7, and two mobile user terminals 8 and 9, which are connected to the basestations 4 and 5 respectively by radio links 10 and 11. Further, MSC 3 is connected to a telephone network 14 by a communication link 15 and a second MSC 12 is connected to MSC 3 by a communication link 13. MSC 12 can serve other basestations and users (not shown) in a different geographical area.

While in a mobile telephone network the connection between the mobile terminals 8 and 9 and the basestations 4 and 5 are always radio links, the communication links 6, 7 between the basestations 4,5 and the MSC 3 as well as the communication links 13, 15 from or to the MSC 3 can be of a any type, including for example cable, radio or glass fibre links.

Usually, a mobile telephone network comprises further components, which are not essential to the invention and therefore not shown in the drawings.

As an example, we assume that the utilization factor has to be determined for the user of terminal 8, called user A, when, for instance, communicating with the user of terminal 9, called user B. This monitoring of the communication activities of user A can be done in different locations. In figure 3, monitoring devices 16.1 - 16.5 are shown in some of these locations.

Monitoring device 16.1 is located within the mobile switching centre MSC 3 and is built for monitoring the communication channels used by user A. Monitoring device 16.1 could directly monitor the data packets sent from or to user A on the incoming or outgoing links of MSC 3. In this case, it would have to evaluate the data packets by itself. Another possibility would be to benefit from the fact, that the MSC 3 does evaluate the data packets anyway and therefore use these results to monitor the transmission protocols and to determine the utilization factor.

Monitoring device 16.2 directly monitors the communication link 6 between MSC 3 and basestation 4 by tapping this link. How this link is tapped depends on the physical type (radio link, cable etc.) of link.

Monitoring device 16.3 is located within basestation 4. The monitoring can be done in the same ways as done by monitoring device 16.1.

Monitoring device 16.4, which monitors directly the air interface by receiving and evaluating the transmission signals sent by terminal 8 or the basestation 4, is located somewhere within the radio cell served by basestation 4, where it can receive the signals from the basestation 4 as well as those from terminal 8.

Monitoring device 16.5 is directly connected to terminal 8. It can evaluate the data packets by itself or, similar to monitoring device 16.1 can benefit from the data packet evaluation of the terminal 8.

If use A communicates with a user connected to MSC 12 or with a user within the telephone network 14, the controlling of his communication could also be done with a monitoring device connected to the communication links 13 or 15 or even with a monitoring device somewhere within the telephone network 14.

Each of the monitoring devices 16.1 - 16.5 can, as shown in figure 3, be implemented as an independent apparatus in a separate housing which then has to be connected to the other components of the network as required. However, the monitoring devices 16.1 - 16.5 can also be integrated in other components of the network by means of hardware and/or software.

In order to determine a utilization factor to control the radio resource allocation method, one of the shown monitoring devices 16.1 - 16.5 is sufficient. Nevertheless, two or more monitoring devices 16.1 - 16.5 could be used simultaneously to determine two or more utilization factors. Here the resource allocation could depend on some or all of these utilization factors.

Figure 4 shows a more detailed view of the monitoring device 16.4 and MSC 3, which, according to our example, allocates the required radio resources to the terminals 8 and 9 with an allocation unit 21. The resource allocation is done depending on this utilization factor, that is why it has to be communicated to the MSC 3. To transmit the utilization factor to MSC 3, any of the existing or any other suited communication link could be used.

The monitoring of the communication between basestation 4 and terminal 8 by the monitoring device 16.4 is done by receiving the transmission signals from terminal 8 and/or basestation 4, transmitted on radio link 10. Next, the monitoring device 16.4 detects with a detector 18 time periods in the received signals where the terminal 8 does neither send nor receive any data. A processor unit 19 then determines a utilization factor and transmits this factor to the MSC 3. For this it utilizes the communication link 20, which is shown as a dotted line, because the type of communication link depends on where the monitoring device 16.4 is located. In our example, the utilization factor would probably be transmitted to the MSC 3 by a radio link from the monitoring device 16.4 to the basestation 4 and further from basestation 4 to MSC 3 via communication link 6.

The utilization factor as received by the MSC 3 is forwarded to the allocation unit, which, depending on the value of the utilization factor, adjusts the currently used resource allocation algorithm in order to obtain a better resource exploitation by the terminals.

To summarise it can be stated that the invention enables the improvement of the algorithms, which are used to allocate the available radio resources in a radio communication network to the users, by measuring how much of the radio resources allocated to a user are actually used, in other words, how much of these resources are wasted. By repeating this measurements, the end result should be a radio network, where the transmission capacity is used efficiently to serve the maximum number of subscribers simultaneously.

## Claims

1. Method for allocating radio resources of a radio communication network to a plurality of users (8, 9), where a user is allocated a certain transmission capacity, **characterised in that** a utilization factor is determined by determining how much of said allocated certain transmission capacity is actually used by said user and **in that** the radio resources are allocated depending on said utilization factor.

2. Method according to claim 1, **characterised in that** said utilization factor is determined by detecting (18) time intervals in which the user does not exploit the transmission capacity allocated to him.

3. Method according to claim 2, **characterised in that** those time intervals are detected (18). in which the user does not transmit or receive any data.

4. Method according to claim 3, **characterised in that** said time intervals are detected by directly monitoring (16.4) a radio interface (10) of the radio communication network and detecting time periods without any data throughput.

5. Method according to claim 3, **characterised in that** a multilayer protocol stack with a first layer is used to transmit data between a transmitter (8) and a receiver (9) and said time intervals are detected by monitoring (16.5) said first layer directly in the transmitter and/or the receiver.

6. Method according to claim 3, **characterised in that**, the user is allocated radio resources by allocating a data transmission rate and said time intervals are detected by subtracting a target transmission time for transmitting a certain amount of data with said data transmission rate from an actual transmission time required by the user to transmit said amount of data, where the actual transmission time is measured and the target transmission time is calculated by dividing said amount of data by said data transmission rate.

7. Method according to one of claims 1 to 6, **characterised in that** the transmission capacity allocated to the user comprises several transmission channels and the utilization factor is determined separately for each transmission channel.

8. Radio communication network with means (21) adapted to allocate radio resources to a plurality of users (8, 9), where a user is allocated a certain transmission capacity, **characterised in that** the radio network includes means (18. 19) adapted to determine a utilization factor by determining how much of said transmission capacity is actually used by said user and **in that** said means (21) adapted to allocate radio resources are adapted to allocate the radio resources depending on said utilization factor.

9. Radio communication network according to claim 8, **characterised in that** the means (18, 19) adapted to determine the utilization factor are adapted to detect time intervals, in which the user (8, 9) does not exploit the transmission capacity allocated to him.

10. Radio communication network according to claim 8 or 9, **characterised in that** the means (18, 19) adapted to determine the utilization factor are adapted to detect time intervals, in which the user does not transmit or receive any data.

11. Radio communication network according to one of claims 8 to 10, where the transmission capacity can be allocated to a user (8, 9) by allocating several transmission channels to the user, **characterised in that** the means (18, 19) adapted to determine the utilization factor are adapted to determine the utilization factor separately for each transmission channel.

12. Device (16.1, 16.2. 16.3. 16.4. 16.5) for a radio communication network as claimed in one of claims 8 to 11 with means (21) adapted to allocate radio resources to a plurality of users (8, 9), where a user is allocated a certain transmission capacity, **characterised in that** the device includes means (18, 19) adapted to determine a utilization factor by determining how much of said transmission capacity is actually used by said user.

## Patentansprüche

1. Verfahren zum Zuweisen von Funkressourcen eines Funkübertragungsnetzwerks zu einer Vielzahl von Nutzern (8, 9), bei dem einem Nutzer eine bestimmte Übertragungskapazität zugewiesen wird, **dadurch gekennzeichnet, dass** ein Nutzungsfaktor bestimmt wird, indem bestimmt wird, wie viel der zugewiesenen, bestimmten Übertragungskapazität tatsächlich vom Nutzer verwendet wird, und dass die Funkressourcen in Abhängigkeit von dem Nutzungsfaktor zugewiesen werden.

2. Verfahren nach Anspruch 1, **dadurch gekennzeichnet, dass** der Nutzungsfaktor bestimmt wird, indem die Zeitintervalle bestimmt werden (18), in denen der Nutzer die ihm zugewiesene Übertragungskapazität nicht ausnutzt.

3. Verfahren nach Anspruch 2, **dadurch gekennzeichnet, dass** die Zeitintervalle bestimmt werden (18), in denen der Nutzer keine Daten überträgt oder empfängt.

4. Verfahren nach Anspruch 3, **dadurch gekennzeichnet, dass** die Zeitintervalle bestimmt werden, indem unmittelbar eine Funkschnittstelle (10) des Funkobertragungsnetzwerks überwacht wird (16.4) und die Zeitperioden ohne Datendurchsatz bestimmt werden.

5. Verfahren nach Anspruch 3, **dadurch gekennzeichnet, dass** ein mehrschichtiger Protokollstapel mit einer ersten Schicht zum Übertragen von Daten zwischen einem Sender (8) und einem Empfänger (9) verwendet wird, und dass Zeitintervalle festgestellt werden, indem die erste Schicht unmittelbar im Sender und/odar Empfänger überwacht wird (16.5).

6. Verfahren nach Anspruch 3, **dadurch gekennzeichnet, dass** dem Nutzer Funkressourcen zugewiesen werden, indem eine Datenübertragungsrate zugewiesen wird, und die Zeitintervalle bestimmt werden, indem eine Sollübertragungszeit zum Übertragen einer bestimmten Datenmenge mit der Datenübertragungsrate von einer tatsächlichen Übertragungszeit, die vom Nutzer zum Übertragen der Datenmenge benötigt wird, abgezogen wird, wobei die tatsächliche Datenübertragungszeit gemessen und die Sollübertragungszeit durch Division der Datenmenge durch die Datenübertragungsrate berechnet wird.

7. Verfahren nach einem der Ansprüche 1 bis 6, **dadurch gekennzeichnet, dass** die einem Nutzer zugewiesene Übertragungskapazität verschiedene Obertragungskanäle umfasst und der Nutzungsfaktor für jeden übertragungskanal getrennt bestimmt wird.

8. Funkkommunikationsnetzwerk mit Mitteln (21) zum Zuweisen von Funkressourcen an eine Vielzahl von Nutzern (8, 9), wobei einem Nutzer eine bestimmte Übertragungskapazität zugewiesen wird, **dadurch gekennzeichnet, dass** das Funknetzwerk Mittel (18, 19) zum Bestimmen eines Nutzungsfaktors, indem festgestellt wird, wie viel der Übertragungskapazität tatsächlich vom Nutzer genutzt wird, aufweist, und dass die Mittel (21) zum Zuweisen von Funkressourcen so beschaffen sind, dass sie die Funkressourcen in Abhängigkeit vom Nutzungsfaktor zuweisen.

9. Funkkommunikationsnetzwerk nach Anspruch 8, **dadurch gekennzeichnet, dass** die Mittel (18, 19) zum Bestimmen des Nutzungsfaktors so beschaffen sind, dass sie Zeitintervalle, in denen der Nutzer (8, 9) nicht die ihm zugewiesene Übertragungskapazität ausnutzt, bestimmen können.

10. Funkkommunikationsnetzwerk nach Anspruch 8 oder 9, **dadurch gekennzeichnet, dass** die Mittel (18, 19) zum Bestimmen des Nutzungsfaktors so beschaffen sind, dass sie Zeitintervalle feststellen können, in denen der Nutzer keine Daten überträgt oder empfängt.

11. Funkkommunikationsnetzwerk nach einem der Ansprüche 8 bis 10, **dadurch gekennzeichnet, dass** die Übertragungskapazität einem Nutzer (8, 9) zugewiesen werden kann, indem dem Nutzer verschiedene Übertragungskanäle zugewiesen werden, **dadurch gekennzeichnet, dass** die Mittel (18, 19) zum Bestimmen des Nutzungsfaktors so beschaffen sind, dass sie den Nutzungsfaktor für jeden Übertragungskanal getrennt bestimmen können.

12. Vorrichtung (16.1, 16.2, 16.3, 16.4, 16.5) für ein Funkkommunikationsnetzwerk nach einem der Ansprüche 8 bis 11 mit Mitteln (21) zum Zuweisen von Funkressourcen an eine Vielzahl von Nutzern (8, 9), wobei einem Nutzer eine bestimmte Übertragungskapazität zugewiesen wird, **dadurch gekennzeichnet, dass** die Vorrichtung Mittel (18, 19) zum Bestimmen eines Nutzungsfaktors, indem festgestellt wird, wie viel der Übertragungskapazität tatsächlich vom Nutzer genutzt wird, umfasst.

## Revendications

1. Procédé d'affectation de ressources radio d'un réseau de radiocommunication à une pluralité d'utilisateurs (8, 9), dans lequel est affecté à un utilisateur une certaine capacité de transmission, **caractérisé en ce qu'**un facteur d'utilisation est déterminé en déterminant quelle quantité de ladite certaine capacité de transmission affectée est réellement utilisée par ledit utilisateur et **en ce que** les ressources radio sont affectées selon ledit facteur d'utilisation.

2. Procédé selon la revendication 1, **caractérisé en ce que** ledit facteur d'utilisation est déterminé en détectant (18) des intervalles de temps dans lesquels l'utilisateur n'exploite pas la capacité de transmission qui lui est affectée.

3. Procédé selon la revendication 2, **caractérisé en ce que** ces intervalles de temps sont détectés (18), au cours desquels l'utilisateur ne transmet pas ou ne reçoit pas de données.

4. Procédé selon la revendication 3, **caractérisé en ce que** lesdits intervalles de temps sont détectés en contrôlant directement (16.4) une interface radio (10) du réseau de radiocommunication et en détectant des périodes de temps sans aucun débit de données.

5. Procédé selon la revendication 3, **caractérisé en ce qu'**une pile de protocoles multicouche avec une première couche est utilisée pour transmettre des données entre un émetteur (8) et un récepteur (9) et **en ce que** lesdits intervalles de temps sont détectés en contrôlant (16.5) ladite première couche directement dans l'émetteur et/ou le récepteur.

6. Procédé selon la revendication 3, **caractérisé en ce que**, sont affectées à l'utilisateur des ressources radio en affectant un taux de transmission de données et **en ce que** lesdits intervalles de temps sont détectés en soustrayant un temps de transmission cible en vue de transmettre une certaine quantité de données avec ledit taux de transmission de données d'un temps de transmission réel requis par l'utilisateur pour transmettre ladite quantité de données, où le temps de transmission réel est mesuré et le temps de transmission cible est calculé en divisant ladite quantité de données par ledit taux de transmission de données.

7. Procédé selon l'une quelconque des revendications 1 à 6, **caractérisé en ce que** la capacité de transmission affectée à l'utilisateur comporte une multitude de canaux de transmission et **en ce que** le facteur d'utilisation est déterminé séparément pour chaque canal de transmission.

8. Réseau de radiocommunication présentant des moyens (21) adaptés pour affecter des ressources radio à une pluralité d'utilisateurs (8, 9), dans lequel est affectée à un utilisateur une certaine capacité de transmission, **caractérisé en ce que** le réseau radio inclut des moyens (18, 19) adaptés pour déterminer un facteur d'utilisation en déterminant quelle quantité de ladite capacité de transmission est réellement utilisée par ledit utilisateur et **en ce que** lesdits moyens (21) adaptés pour affecter des ressources radio sont adaptés pour affecter des ressources radio selon ledit facteur d'utilisation.

9. Réseau de radiocommunication selon la revendication 8, **caractérisé en ce que** les moyens (18, 19) adaptés pour déterminer le facteur d'utilisation sont adaptés pour détecter des intervalles de temps, dans lesquels l'utilisateur (8, 9) n'exploite pas la capacité de transmission qui lui est affectée.

10. Réseau de radiocommunication selon la revendication 8 ou 9, **caractérisé en ce que** les moyens (18, 19) adaptés pour déterminer le facteur d'utilisation sont adaptés pour détecter des intervalles de temps, dans lesquels l'utilisateur ne transmet ou ne reçoit aucune donnée.

11. Réseau de radiocommunication selon l'une quelconque des revendications 8 à 10, dans lequel la capacité de transmission peut être affectée à un utilisateur (8, 9) en affectant une multitude de canaux de transmission à l'utilisateur, **caractérisé en ce que** les moyens (18, 19) adaptés pour déterminer le facteur d'utilisation sont adaptés pour déterminer le facteur d'utilisation séparément pour chaque canal de transmission.

12. Dispositif (16.1, 16.2, 16.3, 16.4, 16.5) pour un réseau de radiocommunication selon l'une quelconque des revendications 8 à 11 présentant des moyens (21) adaptés pour l'affectation de ressources radio à une pluralité d'utilisateurs (8, 9), dans lequel est affectée à un utilisateur une certaine capacité de transmission, **caractérisé en ce que** le dispositif inclut des moyens (18, 19) adaptés pour déterminer un facteur d'utilisation en déterminant quelle quantité de ladite capacité de transmission est utilisée réellement par ledit utilisateur.
